# EUROPÄISCHE PATENTSCHRIFT

(11) **EP 0 704 870 B1**
(45) Veröffentlichungstag und Bekanntmachung des Hinweises auf die Patenterteilung: **28.01.1998**
(21) Anmeldenummer: 95114754.5
(22) Anmeldetag: 19.09.1995
(51) Int. Cl.: H01G 4/35, H01G 4/38, H03H 1/00

(54) **Mehrfach-Durchführungskondensator**
Multiple feed-through capacitor
Condensateur à traversées multiples

(30) Priorität: 20.09.1994 DE 4433540
(43) Veröffentlichungstag der Anmeldung: 03.04.1996
(73) Patentinhaber: SIEMENS MATSUSHITA COMPONENTS GmbH & CO KG, 81617 München (DE)
(72) Erfinder: Aufleger, Peter, Dipl.-Ing., D-89542 Herbrechtingen (DE)
(74) Vertreter: Fuchs, Franz-Josef, Dr.-Ing.

(56) Entgegenhaltungen:
- EP-A- 0 452 643
- DE-A- 762 386

## Beschreibung

Die Erfindung betrifft einen Mehrfach-Durchführungskondensator für Leitungen mit einem N-Leiter, n (n≥1) Phasenleitern sowie gegebenenfalls einem PE-Leiter für EMV- und Schutzfilter zum Einsatz bei geschirmten Räumen, Systemen und Anlagen, der aus auf einem Kernrohr aufgewickelten Einzelkondensatoren besteht, die auf ihren Stirnseiten Kontaktschichten aufweisen.

Um hochwertige Schutzfilter (Schutzeinheiten) für geschirmte Räume, Systeme und Anlagen für Frequenzen ab einigen MHz bis zu mehreren GHz herzustellen, werden Mehrfach-Durchführungskondensatoren bzw. Mehrfach-Durchführungsfilter benötigt. Bisher gibt es für diese spezielle Anwendung keine Sonderkondensatoren, so daß eine sehr komplizierte Fertigung für beispielsweise einen 4-fach-Durchführungskondensator notwendig ist. Aufgrund dieser speziellen Fertigung ist das Volumen dieser Mehrfach-Durchführungskondensatoren wegen der sehr großen räumlichen Abmessungen relativ groß, woraus hohe Fertigungskosten resultieren.

Aufgabe der vorliegenden Erfindung ist es, einen Mehrfach-Durchführungskondensator der eingangs genannten Art anzugeben, der sich durch ein verringertes Volumen auszeichnet.

Diese Aufgabe wird erfindungsgemäß dadurch gelöst, daß die Kondensatorwickel konzentrisch und koaxial übereinander angeordnet und durch isolierende Zwischenlagen voneinander getrennt sind, daß die auf einer Seite angeordneten Stirnkontaktschichten gemeinsam und großflächig mit dem N-Leiter und die auf der gegenüberliegenden Seite angeordneten Stirnkontaktschichten der Einzelkondensatoren mit dem jeweiligen Phasen- bzw. dem PE-Leiter oder einem Masse-Potential (PE) aufweisenden Kondensator-Gehäuse großflächig verbunden sind, und daß zumindest der N-Leiter durch das Kernloch des Kernrohrs hindurchgeführt ist.

Bevorzugte Weiterbildungen bestehen darin daß außer dem N-Leiter auch die Phasenleiter isoliert durch das Kernloch geführt sind, und daß die Phasenleiter mit den jeweiligen Stirnkontaktschichten für die zugehörigen Phasen des Wickels rundum großflächig kontaktiert sind, oder daß die Phasenleiter koaxial auf den zugehörigen Wickeln angeordnet und mit diesen konzentrisch kontaktiert sind.

Weiterhin ist es vorteilhaft, wenn der Mehrfach-Durchführungskondensator HF-dicht in ein Gehäuse eingebaut ist.

Die Erfindung wird anhand der folgenden Ausführungsbeispiele erläutert.

In der dazugehörenden Zeichnung zeigen:
- Fig.1: eine Ausführungsform mit durch das Kernloch geführten Leitern in stirnseitiger Ansicht,
- Fig.2: den Kondensator nach Fig.1 in Seitenansicht,
- Fig.3: eine Ausführungsform, bei der nur der N-Leiter durch das Kernloch geführt ist in stirnseitiger Ansicht und
- Fig.4: den Kondensator nach Fig.3 in Seitenansicht.

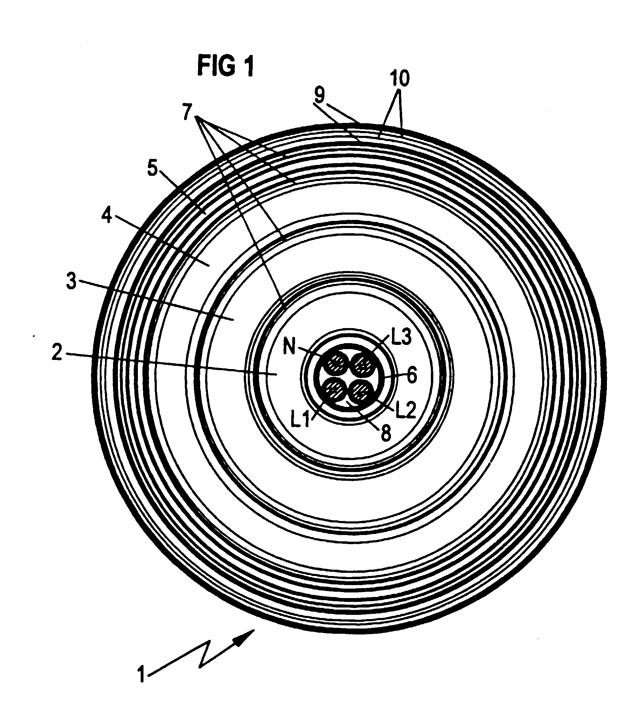

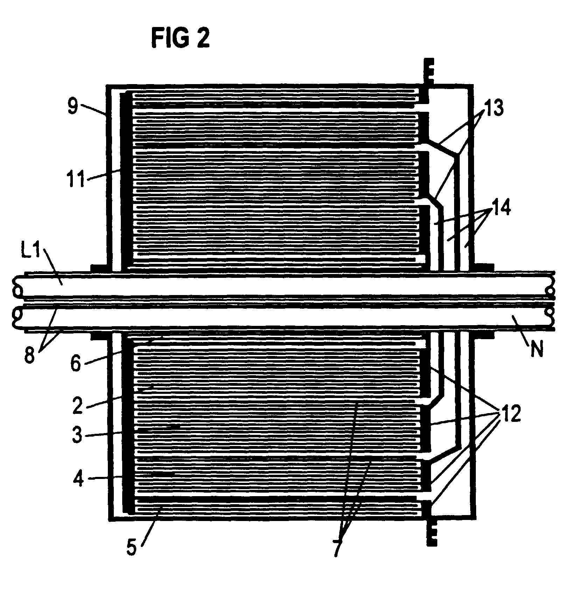

In den Fig.1 und 2 ist eine Ausführungsform eines Vierfach-Durchführungskondensators dargestellt, bei der übereinander liegende Wickel 2,3,4,5 auf einem Kernrohr 6 angeordnet sind. Die einzelnen Wickel 2,3,4,5 sind durch geeignete Mittel, z.B. Trennlagen 7 voneinander isoliert.

Im Kernrohr 6 verlaufen isoliert durch eine Leiterisolation 8 gegeneinander - und gegebenenfalls auch gegen das Kernrohr 6 isoliert, falls dieses aus einem elektrisch leitfähigen Werkstoff besteht - der N-Leiter N und die Phasenleiter L1,L2 und L3. Auf der Außenseite ist ein Gehäuse 9 mit einer HF-Dichtung 10 angeordnet.

Die einzelnen Kondensatorwickel 2,3,4,5 besitzen an ihren Stirnseiten Stirnkontaktschichten, die bevorzugt nach dem Schoop'schen Flammspritzverfahren hergestellt sind. Auf der einen Stirnseite sind alle Kondensatorwickel 2,3,4,5 durch eine gemeinsame Schoopschicht 11 miteinander verbunden, wobei die Schicht 11 ihrerseits mit dem N-Leiter N elektrisch verbunden ist.

Auf der anderen Stirnseite sind die Schoopschichten 12 der einzelnen Kondensatorwickel 2,3,4,5 durch die Trennlagen 7 elektrisch gegeneinander isoliert und über entsprechende Anschlüsse 13 mit den Zugeordneten Phasenleitern L1,L2,L3 verbunden. Zwischen den Anschlüssen 13 befindet sich eine geeignete Isolation 14. Der äußere Anschluß 13 ist mit dem Gehäuse 9 verbunden, so daß das Gehäuse Masse-Potential (PE) aufweist.

Die verfügbaren Stromstärken sind nur vom Durchmesser des Kernlochs und den dadurch möglichen Durchmessern der Leiter N,L1,L2,L3 abhängig.

Weiterhin können bei der in Fig.1 und 2 dargestellten Ausführungsform eines Mehrfach-Durchführungskondensators Ferritkerne eingebracht werden, so daß ein Mehrfach-Durchführungsfilter entsteht.

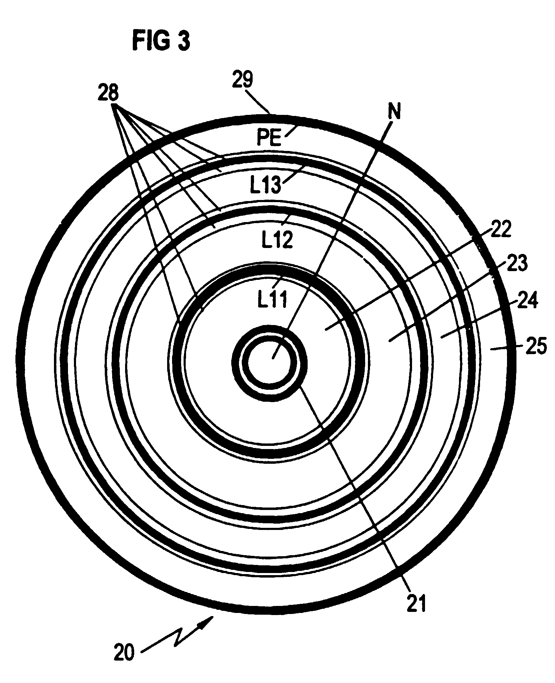

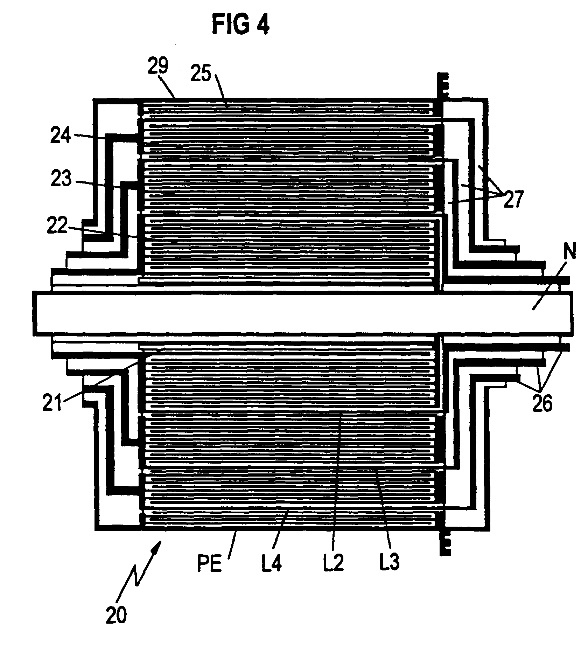

In den Fig.3 und 4 ist eine weitere Ausführungsform eines Vierfach-Durchführungskondensator dargestellt, bei dem nur der N-Leiter N durch das Kernloch geführt ist. Die einzelnen Kondensatorwickel 22,23,24,25 sind konzentrisch und übereinanderliegend auf dem Kernrohr 21 angeordnet. Anders als bei der vorstehend beschriebenen Ausführungsform sind die Phasenleiter L11,L12,L13 sowie der PE-Leiter in Form eines Wickels auf dem entsprechendem Kondensatorwickel 22,23,24 bzw. 25 angeordnet.und durch Isolierungen 28 von den Wickeln 22,23,24,25 getrennt sind Die Kontaktierung entspricht derjenigen vom vorhergehenden Ausführungsbeispiel, d.h., daß die einzelnen Phasenleiter L11,L12,L13 sowie der PE-Leiter konzentrisch mit den zugeordneten Stirnkontaktschichten der Einzelkondensatoren 22,23,24,25 verbunden sind. Andererseits sind die einzelnen Leiter L11,L12,L13,PE mit äußeren Anschlüssen 26 versehen, die durch Isolierungen 27 voneinander elektrisch getrennt sind. Auch der Kondensator 20 ist HF-dicht in ein Gehäuse 29 eingebaut.

Der Mehrfach-Durchführungskondensator nach der Erfindung zeichnet sich durch einen kompakteren Aufbau gegenüber den herkömmlichen Kondensatoren aus. Ferner ist ein elektrisch isolierter Aufbau (Durchführungskondensator gegen Masse) nicht mehr erforderlich, da das Gehäuse Mass-Potential (PE) besitzt. Die Ausführungsform nach den Fig.3 und 4 weist gegenüber dem ersten Ausführungsbeispiel eine verbesserte Entstörwirkung auf.

## Patentansprüche

1. Mehrfach-Durchführungskondensator für Leitungen mit einem N-Leiter, n, n≥1, Phasenleitern sowie gegebenenfalls einem PE-Leiter (PE) für EMV- und Schutzfilter zum Einsatz bei geschirmten Räumen, Systemen und Anlagen, der aus auf einem Kernrohr aufgewickelten Einzelkondensatoren besteht, die auf ihren Stirnseiten Kontaktschichten aufweisen,
**dadurch gekennzeichnet,**
daß die Kondensatorwickel (2,3,4,5; 22,23,24,25) konzentrisch und koaxial übereinander angeordnet und durch isolierende Zwischenlagen (7,28) voneinander getrennt sind, daß die auf einer Seite angeordneten Stirnkontaktschichten (11) gemeinsam und großflächig mit dem N-Leiter (N) und die auf der gegenüberliegenden Seite angeordneten Stirnkontaktschichten (12) der Einzelkondensatoren (2,3,4,5; 22,23,24,25) mit dem jeweiligen Phasen- (L1,L2,L3; L11,L12,L13) bzw. dem PE-Leiter (PE) oder einem Masse-Potential (PE) aufweisenden Kondensator-Gehäuse (9,29) großflächig verbunden sind, und daß zumindest der N-Leiter (N) durch das Kernloch des Kernrohrs (6,21) hinchgeführt ist.

2. Mehrfach-Durchführungskondensator nach Anspruch 1,
**dadurch gekennzeichnet,**
daß außer dem N-Leiter (N) auch die Phasenleiter (L1,L2,L3) isoliert durch das Kernloch (6) geführt sind, und daß die Phasenleiter (L1,L2,L3) mit den jeweiligen Stirnkontaktschichten (12) für die zugehörigen Phasen des Wickels rundum großflächig kontaktiert sind.

3. Mehrfach-Durchführungskondensator nach Anspruch 1,
**dadurch gekennzeichnet,**
daß die Phasenleiter (L11,L12,L13) koaxial auf den zugehörigen Wickeln (22,23,24) angeordnet und mit diesen konzentrisch kontaktiert sind.

4. Mehrfach-Durchführungskondensator nach einem der Ansprüche 1 bis 3,
**dadurch gekennzeichnet,**
daß zusätzlich Ferritkerne eingebaut sind.

5. Mehrfach-Durchführungskondensator nach einem der Ansprüche 1 bis 4,
**dadurch gekennzeichnet,**
daß er HF-dicht in das Gehäuse (9,29) eingebaut ist.

## Claims

1. Multiple feed-through capacitor for cables having an N-conductor, n, n ≥ 1, phase conductors and, if appropriate, a PE conductor (PE) for EMC filters and protective filters for use in screened rooms, systems and installations, which comprises individual capacitors wound on a core tube which have contact layers on their end faces, characterized in that the capacitor elements (2, 3, 4, 5; 22, 23, 24, 25) are arranged concentrically and coaxially one above another and are separated from one another by insulating interlayers (7, 28), in that the end-face contact layers (11) arranged on one side are connected in common and over a large area to the N-conductor (N), and the end-face contact layers (12), arranged on the opposite side, of the individual capacitors (2, 3, 4, 5; 22, 23, 24, 25) are connected over a large area to the respective phase conductors (L1, L2, L3; L11, L12, L13) or the PE conductor (PE) or a capacitor container (9, 29) at earth potential (PE), and in that at least the N-conductor (N) is guided through the core hole of the core tube (6, 21).

2. Multiple feed-through capacitor according to Claim 1, characterized in that apart from the N-conductor (N), the phase conductors (L1, L2, L3) are also guided in an insulated fashion through the core hole (6) and in that the phase conductors (L1, L2, L3) make contact all around over a large area with the respective end-face contact layers (12) for the associated phases of the element.

3. Multiple feed-through capacitor according to Claim 1, characterized in that the phase conductors (L11, L12, L13) are arranged coaxially on the associated elements (22, 23, 24) and make contact with the latter concentrically.

4. Multiple feed-through capacitor according to one of Claims 1 to 3, characterized in that ferrite cores are additionally installed.

5. Multiple feed-through capacitor according to one of Claims 1 to 4, characterized in that it is installed in the container (9, 29) in a RF-tight fashion.

## Revendications

1. Condensateur à traversées multiples pour circuits avec un conducteur neutre, n, n>=1, conducteurs de phase et le cas échéant un conducteur-PE (PE), pour des filtres de compatibilité électromagnétique et filtres de protection pour l'utilisation dans des espaces, des systèmes et des installations blindés, ledit condensateur étant constitué de condensateurs individuels enroulés sur un tube central, lesdits condensateurs présentant sur leurs faces frontales des couches de contact, caractérisé en ce que les enroulements de condensateurs (2, 3, 4, 5; 22, 23, 24, 25) sont disposés les uns par dessus les autres de façon concentrique et coaxiale et sont séparés les uns des autres par des couches intermédiaires isolantes (7, 28), en ce que les couches frontales de contact (11) disposées sur un coté sont connectées entre elles et avec le conducteur neutre (N) sur une grande surface et en ce que les couches frontales de contact (12) des condensateurs individuels (2, 3, 4, 5; 22, 23, 24, 25) disposées sur le coté opposé sont connectées sur une grande surface avec les conducteurs de phase (L1, L2, L3; L11, L12, L13) respectifs ou le cas échéant avec le conducteur-PE (PE) ou avec un boîtier de condensateur (9, 29) ayant un potentiel de masse (PE) et en ce qu'au moins le conducteur neutre (N) traverse le trou central du tube central (6, 21).

2. Condensateur à traversées multiples selon la revendication 1, caractérisé en ce qu'en plus du conducteur neutre (N) les conducteurs de phase (L1, L2, L3) traversent aussi le trou central (6) de façon isolée et en ce que les conducteurs de phase (L1, L2, L3) sont connectés tout autour et sur une grande surface avec respectivement chaque couche frontale de contact (12) pour les phases correspondantes de l'enroulement.

3. Condensateur à traversées multiples selon la revendication 1, caractérisé en ce que les conducteurs de phase (L11, L12, L13) sont disposés coaxialement sur les enroulements (22, 23, 24) correspondants et sont connectés concentriquement avec eux.

4. Condensateur à traversées multiples selon l'une des revendications 1 à 3, caractérisé en ce que sont en plus montés des noyaux de ferrite.

5. Condensateur à traversées multiples selon l'une des revendications 1 à 4, caractérisé en ce qu'il est monté blindé HF dans le boîtier (9, 29).
